# EUROPÄISCHE PATENTSCHRIFT

(11) **EP 0 554 667 B1**
(45) Veröffentlichungstag und Bekanntmachung des Hinweises auf die Patenterteilung: **19.02.1997**
(21) Anmeldenummer: 93100272.9
(22) Anmeldetag: 11.01.1993
(51) Int. Cl.: C08L 33/16, C08L 33/06, D06M 15/277, D21H 21/16, C04B 41/48

(54) **Mischungen fluorhaltiger Copolymerisate**
Blends of fluor containing copolymers
Mélanges de copolymères fluorés

(30) Priorität: 22.01.1992 DE 4201603
(43) Veröffentlichungstag der Anmeldung: 11.08.1993
(73) Patentinhaber: BAYER AG, 51368 Leverkusen (DE)
(72) Erfinder: Michels, Gisbert, Dr., W-5000 Köln 80 (DE); Ehlert, Hans-Albert, Dipl.-Ing., W-5090 Leverkusen (DE)

(56) Entgegenhaltungen:
- NL-A- 7 303 244
- PATENT ABSTRACTS OF JAPAN vol. 11, (C-416)

## Beschreibung

Die Erfindung betrifft Mischungen von Copolymerisaten aus Perfluoralkylgruppen enthaltenden Monomeren, hydrophilen, ionischen und nicht ionischen Monomeren sowie weiteren Comonomeren. Die Erfindung betrifft weiterhin wäßrige Dispersionen dieser Mischungen aus fluorhaltigen Copolymerisaten, die Herstellung der Copolymer-Mischungen und ihrer wäßrigen Dispersionen und ihre Verwendung zur Ausrüstung von textilen Materialien, Leder, Papier und mineralischen Substraten gegen Einwirkungen von Öl, Schmutz und Wasser.

Aus US 4 127 711, US 4 564 561, US 4 579 924 und US 4 366 299 ist bekannt, daß Copolymerisate aus Perfluoralkylgruppen enthaltenden Monomeren, hydrophilen, ionischen, beziehungsweise nicht ionischen Monomeren und gegebenenfalls weiteren Comonomeren herstellbar sind.

Nachteilig ist, daß entweder die aus diesen Copolymerisaten hergestellten Dispersionen Lösungsmittel enthalten, die bei der Applikation wegen des relativ niedrigen Flammpunktes besondere Sicherheitsmaßnahmen notwendig machen, oder die Herstellung der Dispersionen nur unter Zuhilfenahme von Emulgatoren möglich ist, die andererseits die gewünschten Wirkungen wiederum verringern, oder daß, um eine hohe Öl- und Wasserabweisung zu gewährleisten, ein sehr hoher Fluorgehalt nötig ist, der andererseits zu Verhärtungen auf den damit ausgerüsteten Substraten führt.

Aus NL-A 7 303 244 ( 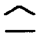 DE-OS 2 311 784) sind Behandlungsmittel zur öl- und wasserfesten Ausrüstung von Substraten bekannt, die ein Gemisch aus stärker und schwächer fluorhaltigen Copolymerisaten darstellen, die durch Emulsionspolymerisation von Comonomeren aus drei Gruppen hergestellt werden, z.B. gemäß dortigem Beispiel 1 aus C₈F₁₇-C₂H₄-SO₂N(CH₃)-C₂H₄-OCO-CH=CH₂, Heptylmethacrylat und N-Methylolacrylamid. Die Behandlungsmittel enthalten weiterhin im allgemeinen oberflächenaktive Mittel.

Der Erfindung liegt daher die Aufgabe zugrunde, hochwirksame öl- und wasserabweisende Textilausrüstungsmittel sowie Mittel zur öl- und wasserabweisenden Ausrüstung von Papier, Leder und mineralischen Substraten zu entwickeln, die ohne Verwendung von Emulgatoren als wäßrige Dispersion herstellbar sind und die weiterhin einen niedrigeren Fluorgehalt besitzen als herkömmliche Ausrüstungsmittel.

Es wurde nun überraschend gefunden, daß Mischungen von Copolymerisaten mit unterschiedlichen Fluorgehalten, bestehend aus Perfluoralkylgruppen enthaltenden Monomeren, hydrophilen, ionischen und hydrophilen, nichtionischen Monomeren sowie weiteren Monomeren, und ihre wäßrigen Dispersionen zur öl- und wasserabweisenden Ausrüstung von Textilien, Papier, Leder und mineralischen Substraten geeignet sind, ohne daß ein sehr hoher Fluorgehalt nötig ist und ohne daß Emulgatoren zur Herstellung von Dispersionen aus diesen Copolymerisaten eingesetzt werden müssen.

Weiterhin sind die aus den Copolymerisaten hergestellten Dispersionen auch dann stabil, wenn der Lösungsmittelanteil so niedrig ist, daß Flammpunkte oberhalb von 100°C resultieren.

Die Erfindung betrifft daher Mischungen, die aus 2 Komponenten A und B bestehen und einen Gesamtfluorgehalt von 25 bis 40 Gew.-%, bezogen auf das Gesamtgewicht von A und B, haben, wobei die Komponente A ein Perfluoralkylgruppen enthaltendes (Meth)Acrylat-Copolymer mit einem Fluorgehalt von 30 bis 50 Gew.-%, bezogen auf das Gesamtgewicht von A, darstellt und die Komponente B ein 0 bis 20 Gew.-% Fluor enthaltendes (Meth)Acrylat-Copolymer darstellt, wobei der Fluorgehalt durch Perfluoralkylgruppen eingebracht wird und auf das Gesamtgewicht der Komponente B bezogen ist, wobei die Mischungen zusätzlich an sich bekannte Extender für Textilhilfsmittel enthalten können, die dadurch gekennzeichnet sind, daß die Komponente A aus folgenden einpolymerisierten Comonomeren besteht:
a) 50 bis 80 Gew.-% Perfluoralkylgruppen enthaltende (Meth)acrylate der Formel

   CₙF₂ₙ₊₁-X-O-CO-CR¹=CH₂ (I),
b) 1 bis 45 Gew.-% Monomere der Formel

   CH₂=CR⁴-CO-OR⁵ (II)

   und/oder
   Styrol, Acrylnitril, Vinylacetat beziehungsweise Vinylpropionat,
c) 4 bis 30 Gew.-% Monomere der Formel 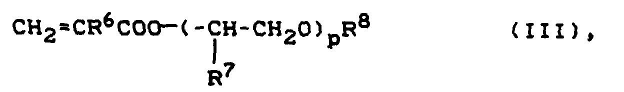 wobei b) und c) insgesamt mindestens 7 Gew.-%, bevorzugt mindestens 11 Gew.-% darstellen, und
d) 1 bis 15 Gew.-% Monomere der Formel

   CH₂=CR¹¹COOCH₂CH₂N(R⁹,R¹⁰) (IVa)

   oder in quaternisierter Form der Formel

   [CH₂=CR¹¹-COO-CH₂CH₂N(R⁹R¹⁰R¹²)]^{⊕}Y^{⊖} (IVb),

   oder in N-oxidierter Form der Formel 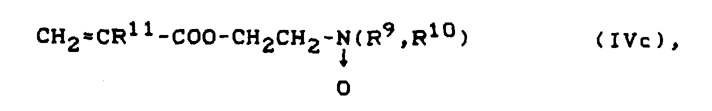 wobei in den Formeln
   - n: eine Zahl von 4 - 12, bevorzugt 6 - 10, darstellt,
   - X: für -(-CH₂-)ₘ-; -SO₂-NR²-CH₂-CHR³- oder -O-(-CH₂-)ₘ- steht, wobei m eine Zahl von 1 bis 4 bedeutet,
   - R¹, R³, R⁴, R⁶, R⁷ und R¹¹: unabhängig voneinander für Wasserstoff oder Methyl stehen,
   - R², R⁹, R¹⁰ und R¹²: unabhangig voneinander C₁-C₄-Alkyl bedeuten,
   - R⁵: für einen C₁-C₂₂-Alkylrest steht,
   - R⁸: Wasserstoff oder C₁-C₈-Alkyl bedeutet,
   - p: für eine Zahl von 1 bis 50 steht und
   - Y: für ein Äquivalent eines ein- bis dreiwertigen Anions steht,
und dadurch gekennzeichnet sind, daß die Komponente B ein 0 bis 20 Gew.-% Fluor; bevorzugt 5 - 20 Gew.-% Fluor enthaltende (Meth)Acrylat-Copolymere darstellt, das aus folgenden einpolymerisierten Comonomeren besteht:

| | | |
|---|---|---|
| a) | 0 bis 40 Gew.-%, | bevorzugt 10-40 Gew.-% der Formel (I) |
| b) | 20 bis 95 Gew.-% | der Formel (II) und/oder Styrol, Acrylnitril, Vinylacetat bzw. Vinylpropionat |
| c) | 4 bis 30 Gew.-% | der Formel (III) |
| d) | 1 bis 15 Gew.-% | der Formel (IVa) oder (IVb) oder (IVc). |

Die Erfindung betrifft weiterhin wäßrige Dispersionen mit 5 bis 50 Gew.-%, bevorzugt 10 bis 40 Gew.-%. bezogen auf das Gesamtgewicht der Dispersion, an von Wasser verschiedenen Inhaltsstoffen (Feststoffgehalt), die dadurch gekennzeichnet sind, daß sie aus den oben beschriebenen Mischungen hergestellt werden.

In bevorzugter Weise nimmt bei Monomeren der Formel (I) n Werte von 6 bis 10 ein und in weiterhin bevorzugter Weise m den Wert 2. In bevorzugter Weise bedeutet bei Monomeren der Formel (I) R¹ Wasserstoff.

In bevorzugter Weise bedeutet bei Monomeren der Formel (II) R⁵ Methyl, Ethyl, Propyl, Butyl, Hexyl oder Octyl, Stearyl oder Behenyl.

In bevorzugter Weise bedeutet bei Monomeren der Formel (III) R⁷ Wasserstoff und der Index p eine Zahl von 3 bis 25. Dabei ist es erstaunlich, daß durch Einbau der Monomeren der Formel (III); in denen R⁷ Wasserstoff und der Index p eine Zahl von 5 bis 9 bedeutet, hervorragende Ergebnisse bei der Textilausrüstung erhalten werden.

In bevorzugter Weise bedeutet bei Monomeren der Formel (IVa;b,c) R⁸ und R⁹ Methyl. Bevorzugte Anionen sind Chlorid, Acetat, Sulfat, Aryl- oder Alkylsulfonat oder Phosphat. Besonders bevorzugt sind Chlorid und Acetat.

In (Meth)Acrylat-Copolymeren können auch Gemische mehrerer unter die Formeln (I), (II), (III) bzw. (IVa, b, c) fallender Stoffe eingesetzt werden.

Die erfindungsgemäßen Mischungen können zusätzlich an sich bekannte Extender für Textilhilfsmittel bzw. an sich bekannte Papierhilfsmittel enthalten; solche sind beispielsweise:
Melaminkondensationsprodukte, wie sie z.B. in DE-A 3 800 845 bzw. in US 2 398 569 beschrieben sind;
wäßrige kolloidale Suspensionen von Organosiloxanen, die beispielsweise aus DE-A 3 307 420 bekannt sind; als Papierhilfsmittel: Retentions-, Naßfest-, Leimungsmittel.

Die Herstellung der Mischungen der Copolymerisate beziehungsweise ihrer wäßrigen Dispersionen erfolgt durch Polymerisation der Monomeren (I), (II), (III) und (IVa,b oder c) separat für die Komponente A und die Komponente B radikalisch in Lösung. Als Lösungsmittel können Essigsäureethylester, Essigsäurebutylester, Aceton, Methylethylketon, Methylisobutylketon, Ethanol, Isopropanol und tert.-Butanol eingesetzt werden. Bevorzugt ist Aceton. Die Ausführung der Polymerisation kann dabei diskontinuierlich oder kontinuierlich erfolgen. Bei der diskontinuierlichen Fahrweise sind das Batch- und Zulaufverfahren zu nennen.

Als Initiatoren für die Polymerisation werden Radikalbildner, wie z.B. Azoverbindungen oder Peroxide eingesetzt. Bevorzugt sind Azoisobutyronitril, Azoisovaleronitril und tert-Butylperpivalat.

Zur Regulierung des Molekulargewichts können Kettenübertragungsmittel wie z.B. Dodecylmercaptan eingesetzt werden.

Die Polymerisationstemperatur beträgt 40 bis 100°C, vorzugsweise 50 bis 90°C.

Die Polymerisate können, falls erwünscht, durch Entfernung, beispielsweise durch Verdampfen der Lösungsmittel erhalten werden.

Die Herstellung von wäßrigen Dispersionen der fluorhaltigen Copolymerisate erfolgt, indem man zur Lösung der Copolymerisate der Komponente A beziehungsweise B nach ihrer Herstellung Wasser hinzugibt und das Lösungsmittel mindestens teilweise abdestilliert. Wird bei der Herstellung der Copolymerisate das Monomer (IVa) benutzt, so wird ein Neutralisationsmittel, in bevorzugter Weise Salzsäure oder Essigsäure. zusammen mit dem Wasser der Copolymerisatlösung zugesetzt.

Die Lösungsmittel können beispielsweise bei erhöhter Temperatur (40 - 90°C) im Vakuum entfernt werden. Es ist grundsätzlich möglich, einen größeren Teil des vorhandenen Lösungsmittels in den erfindungsgemäßen Dispersionen zu belassen. Aus Gründen der Arbeitssicherheit und der Arbeitshygiene wird das Lösungsmittel jedoch bevorzugt so weit abdestilliert, daß die Flammpunkte der Dispersion oberhalb von 100°C liegen. Die wäßrigen Dispersionen sind nach Entfernen des Lösungsmittels stabil.

Die separaten Dispersionen der Copolymerisate der Komponente A und B werden anschließend vermischt. In gleicher Weise kann verfahren werden, wenn einer der genannten Extender zusätzlich im Gemisch vorliegt.

Die Herstellung der erfindungsgemäßen Mischungen kann jedoch auch durch Mischen der fluorhaltigen Copolymerisate beziehungsweise anderer Extender oder Hilfsmittel in Lösung und anschließender Herstellung einer wäßrigen Dispersion und/oder durch Vermischen von fluorhaltigen Copolymerisaten beziehungsweise anderer Extender oder Hilfsmittel enthaltenden Dispersionen erfolgen.

Die Erfindung betrifft weiterhin die Verwendung der erfindungsgemäßen wäßrigen Dispersionen als Ausrüstungsmittel für textile Substrate, insbesondere zur Behandlung von Teppichware. Die chemische Natur der zu behandelnden Substrate kann beispielsweise Zellulose, Zellulosederivate, Polyester, Polyamid und Polyacrylnitril sowie Wolle oder Seide sein, denen die erfindungsgemäßen Dispersionen oleophobe und hydrophobe Eigenschaften verleihen.

Die Anwendung der erfindungsgemäßen wäßrigen Dispersionen auf den erwähnten Substraten erfolgt nach bekannten Verfahren, wie Auszieh-, Foulard-, Sprüh- oder Schaumverfahren mit nachgeschalteter Temperaturbehandlung (120 - 150°C). Die gewünschten oleophoben und hydrophoben Eigenschaften werden gegenüber Ausrüstungsmitteln des Standes der Technik bereits bei geringeren Anwendungsmengen erreicht. Die erfindungsgemäßen Mischungen besitzen eine höhere Öl- und Wasserabweisung als ein einziges homogenes fluorhaltiges Copolymerisat mit dem gleichen Gesamtfluorgehalt. In gleicher Weise können Leder und mineralische Substrate, beispielsweise Stein, ausgerüstet werden.

Die erfindungsgemäßen Dispersionen können als Papierhilfsmittel zur Oleophob- und Hydrophob-Ausrüstung von Papier eingesetzt werden. Neben der Verwendung von an sich bekannten Papierhilfsmitteln wie Retentions-, Naßfest- und Leimungsmitteln kann handelsübliche Stärke eingesetzt wrden. Im Vergleich zu einem handelsüblichen Oleophobmittel (Scotchban F 807 =
[CF₃-(CF₂)₇-SO₂-N(C₂H₅)-C₂H₄-O]₂-P(O)-ONH₄) zeigen sich deutliche Vorteile in der Hydrophobwirkung sowie in der Oleophobwirkung in Gegenwart von Leitungswasser.

Die Anwendung der erfindungsgemäßen Disprsionen als Papierhilfsmittel erfolgt nach bekannten Verfahren, wie die Masse- und Oberflächenimprägnierung. Bevorzugt ist die Oberflächenimprägnierung.

### Beispiel 1

Man bereitet in einem Reaktor mit Thermometer, Rührer und Rückflußkühler eine Lösung aus

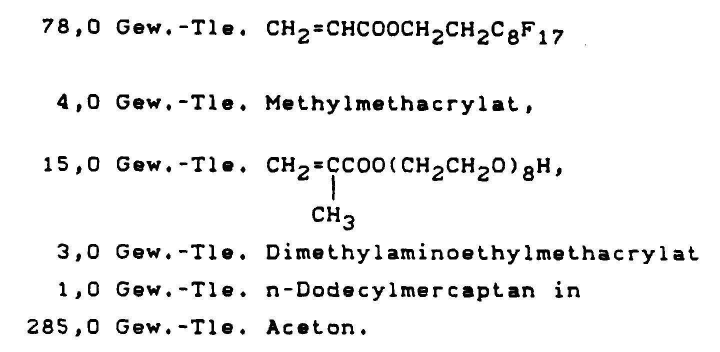

Die Lösung wird zunächst bei Raumtemperatur in einer Stickstoffatmosphäre gerührt, dann mit 2,25 Gew.-Tle. tert.-Butylperpivalat (75 %ig) versetzt und 8 h bei 73°C unter autogenem Druck gehalten. Nach dieser Zeit ist die Polymerisation beendet. Zur Polymerisatlösung, die auf 50°C abgekühlt wird, werden in 15 min eine Lösung von
3,9 Gew.-Tle. Essigsäure in
296,0 Gew.-Tle entionisiertem Wasser
bei 50°C zugegeben. Es wird 15 min. gerührt, und anschließend wird das Aceton destillativ bei 60°C/200-300 mbar entfernt. Man erhält eine stabile Polymerdispersion mit einem Feststoffgehalt von 24,47 Gew.-%. Der Fluorgehalt des Copolymerisates beträgt 45,3 Gew.-%. Die Viskosität der Dispersion, gemessen bei 25°C mit einem Ubbelohde-Viskosimeter, beträgt 29,3 cSt.

### Beispiele 2 - 4

In den Beispielen 2 - 4 werden in gleicher Weise Copolymerisate mit folgenden Zusammensetzungen in Dispersion hergestellt:

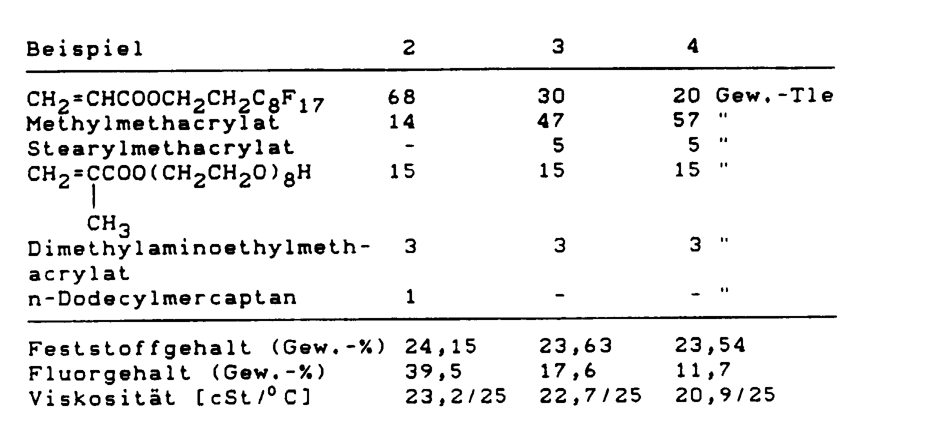

### Beispiel 5 (Mischungen)

Die nach Beispiel 1 - 4 hergestellten, wäßrigen Dispersionen werden erfindungsgemäß abgemischt:

| Mischung (Gew.-Tle.) | A | B | C | D |
|---|---|---|---|---|
| Beispiel 1 | 56,5 | - | 64,0 | - |
| Beispiel 2 | - | 72,2 | - | 78,0 |
| Beispiel 3 | 43,5 | 27,8 | - | - |
| Beispiel 4 | - | - | 36,0 | 27,0 |
| Feststoffgehalt (Gew.-%) | 24,10 | 24,0 | 24,14 | 24,0 |
| Fluorgehalt (Gew.-%) | 33,5 | 33,5 | 33,5 | 33,5 |
| Viskosität [cSt/°C] | 25,3/25 | 20,8/25 | 22,7/25 | 21,1/25 |

### Beispiel 6 (Vergleich)

Die Herstellung und Vorgehensweise entspricht Beispiel 1 mit veränderter Zusammensetzung:

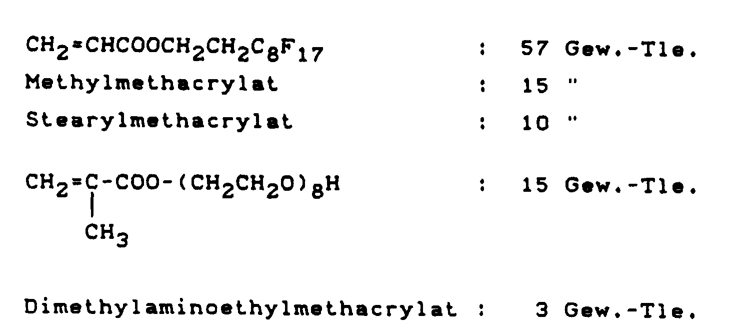

Der Feststoffgehalt beträgt 22,55 Gew.-%, der Fluorgehalt beträgt 33,5 Gew.-%, die Viskosität bei 25°C ist 27,4 cSt.

### Beispiel 7 (Verwendung; Ausrüsten und Beurteilung von Teppichen)

Die Mischungen A-D nach Beispiel 5 werden mit 60 Gew.-Tle. einer wäßrigen kolloidalen Suspension von Organosiloxanen als bekannten Extendern, wie sie in DE 3 307 420 beschrieben sind, und entionisiertem Wasser abgemischt, wobei sich die Anteile zu 100 ergänzen.

Eine 1,0 %ige wäßrige Verdünnung dieser Abmischung wird auf einen Polyamid-Teppich (Tuftingware, Polgewicht: 500 g/m² ) so aufgebracht (Sprühauftrag), daß eine Auflage von 1,0 Gew.-% der obengenannten Mischung (bezogen auf das Polgewicht) auf dem Teppich verbleibt.

Eine weitere Applikationsmethode sieht folgendermaßen aus:
Ein Polyamid-Teppich (Tuftingware, Polgewicht: 500 g/m²) wird mit einer 1,0 Xigen wäßrigen Verdünnung dieser Mischung imprägniert und abgequetscht (Foulard-Verfahren), so daß eine Auflage von 1,0 Gew.-% der obengenannten Abmischung (bezogen auf das Polgewicht) auf dem Teppich verbleibt.

Anschließend wird bei 125 bis 150°C während 5 bis 15 Minuten getrocknet und kondensiert, 24 Stunden bei 23°C und 65 % relativer Luftfeuchte klimatisiert und dann die anwendungstechnischen Prüfungen durchgeführt.

Die Ergebnisse der anwendungstechnischen Prüfungen sind der nachfolgenden Tabelle zu entnehmen.

### Anmerkungen zur Tabelle:

1) Nach AATCC-Test-Methode 118 (5 ist beispielsweise besser als 4). (Die Testflüssigkeiten bzw. -mischungen für die Testmethode sind: Nr. 1; Nujol oder Paraffinöl DAB 8; Nr. 2: 65 Vol.-% Nujol und 35 Vol.-% n-Hexadecan; Nr. 3: n-Hexadecan; Nr. 4: n-Tetradecan; Nr. 5: n-Dodecan; Nr. 6: n-Decan; Nr. 7: n-Octan; Nr. 8: n-Heptan).
2) Beständigkeit gegen das Eindringen einer Wasser/Isopropanol-Mischung in den Teppich (Wasser/Isopropanol = 20/80 ist beispielsweise besser als 30/70)

Es werden Tropfen von Wasser/Isopropanol-Mischungen (Verhältnis 90/10 bis 10/90) auf den Teppich aufgetragen. Das Testergebnis entspricht der Mischung mit höchstem Isopropanolanteil, die mindestens 20 Sekunden lang unverändert auf dem Teppich verbleibt und nicht in den Teppich eindringt.

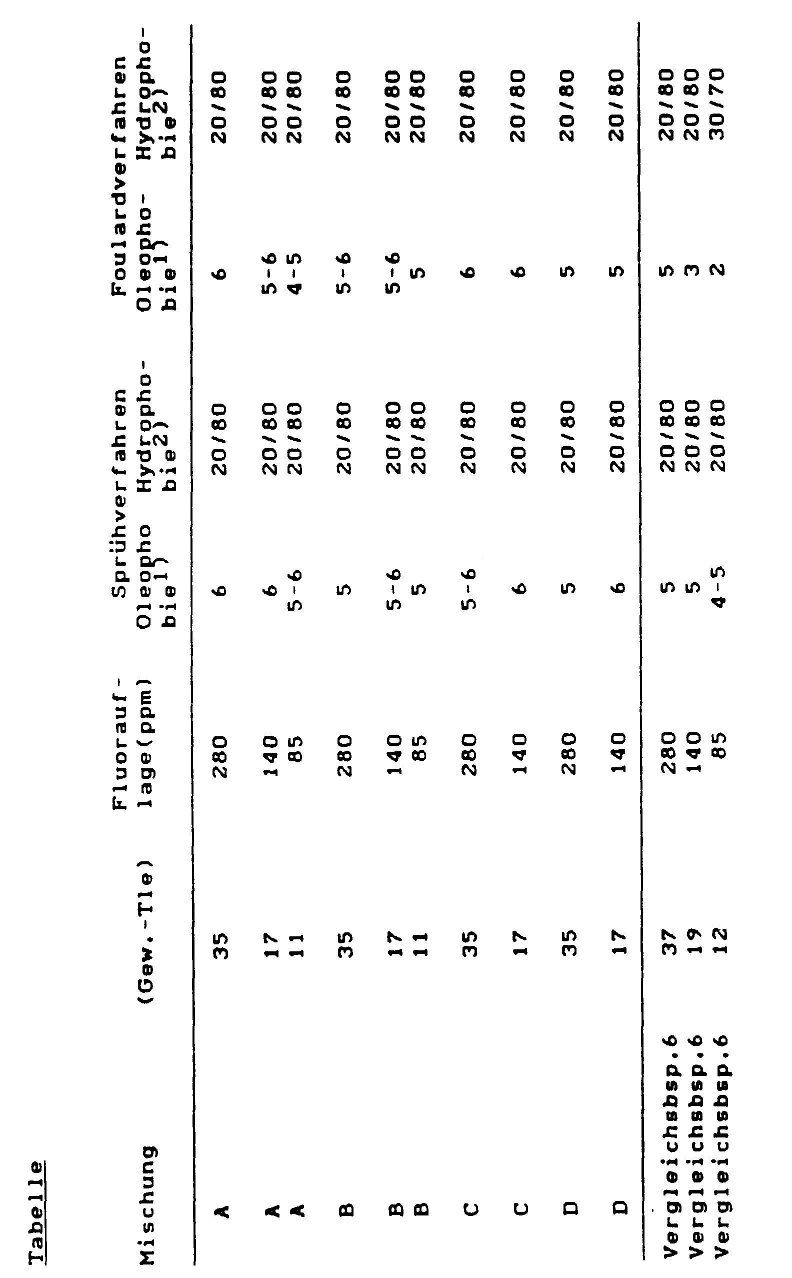

### Beispiel 8 (Verwendung, Ausrüstung und Beurteilung von Papier)

Das folgende Beispiel zeigt die gute Verwendbarkeit der neuartigen Hilfsmittel zur Oleophob- und Hydrophob-Ausrüstung von Papier.

Es wurde folgende Papiersorte verwendet:
50 Teile gebleichter Nadelholzzellstoff,
50 Teile gebleichter Laubholzzellstoff,
10 % Clay-Asche,
Mahlgrad 35° SR,
pH-Wert: 7,2
flächenbezogene Masse: 80 g/m²

Die Ausrüstung der Papiere erfolgte auf einer Laborleimpresse der Firma Mathis, Zürich/Schweiz, Typ HF. Als Imprägnierflotte wurde eine Lösung von 5 Gew.-% handelsüblicher Kartoffelstärke (Perfectamyl A 4692 der Firma Avebe) und eine vorgegebene Menge (siehe Tabelle) des zu prüfenden Hilfsmittels in vollentsalztem Wasser bzw. Leitungswasser mit 17° dH verwendet, Die Naßaufnahme betrug ca. 80 %. Die Trocknung dieser Papiere erfolgt in einem Trockenzylinder während 1 min, bei 90°C. Anschließend wurden die Papiere 2 h bei Raumtemperatur klimatisiert.

### Beurteilung der Hydrophobie und der Oleophobie:

### Hydrophobie:

Zur Beurteilung der wasserabweisenden Wirkung wurde die Wasseraufnahme nach Cobb (DIN 53 132) bei 60 s Prüfzeit bestimmt.

### Oleophobie:

Die ölabweisende Wirkung wurde nach der gleichen Methode (DIN 53 132) bestimmt, wobei jedoch Terpentinöl anstelle Wassr als Prüfflüssigkeit verwendet wurde.

Zusätzlich wurde zur Beurteilung der Öldichte der Tappi-Test 454 ts-66 durchgeführt.

Die folgende Tabelle zeigt die Hydrophob- und Oleophobwirkung des erfindungsgemäßen Hilfsmittels. Im Vergleich zu einem handelsüblichen Oleophobmittel zeigen sich deutliche Vorteile in der Hydrophobwirkung sowie in der Oleophobwirkung in Gegenwart von hartem Brauchwasser.

Die erfindungsgemäßen Mischungen besitzen eine höhere Öl- und Wasserabweisung als ein einziges homogenes fluorhaltiges Copolymerisat mit dem gleichen Gesamtfluorgehalt.

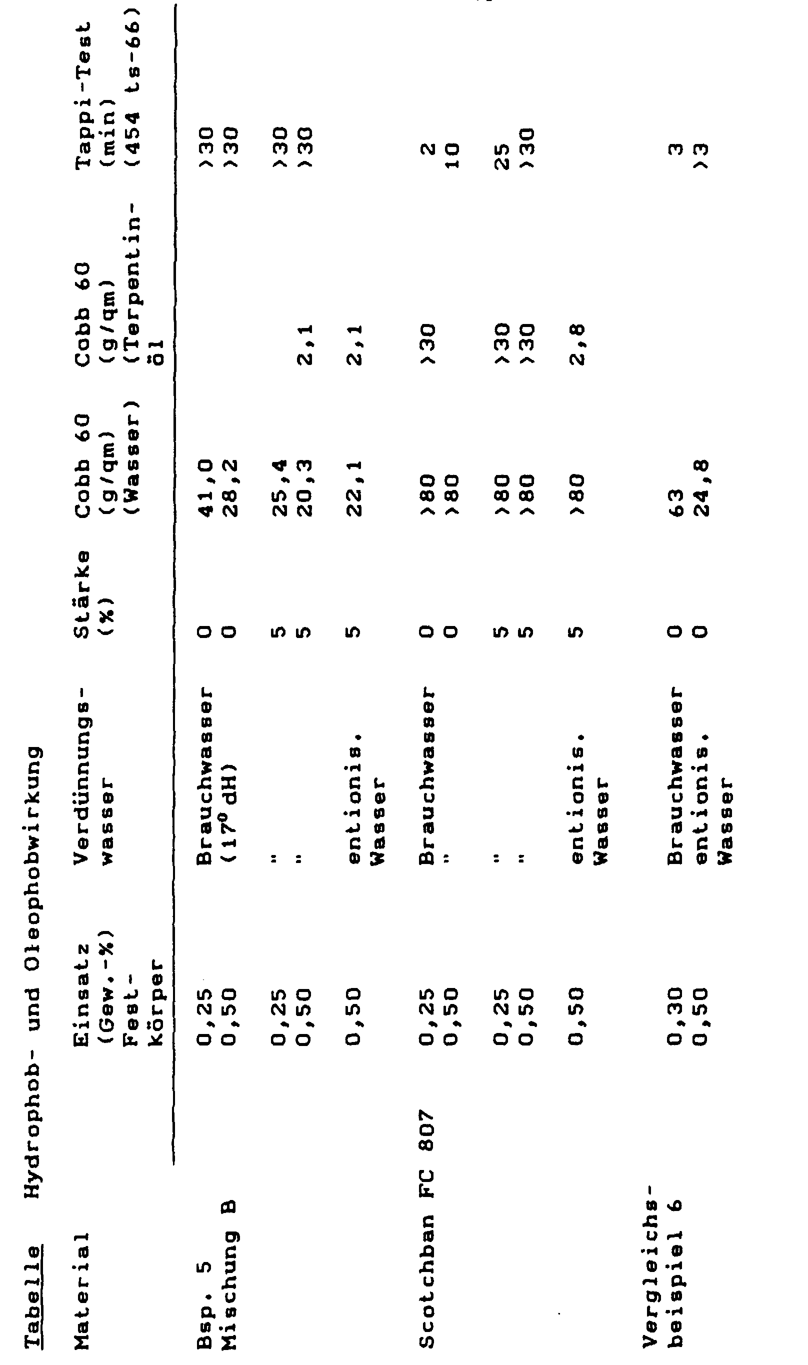

## Patentansprüche

1. Mischungen, die aus 2 Komponenten A und B bestehen und einen Gesamtfluorgehalt von 25-40 Gew.-%, bezogen auf das Gesamtgewicht von A und B, haben, wobei die Komponente A ein Perfluoralkylgruppen enthaltendes (Meth)Acrylat-Copolymer mit einem Fluorgehalt von 30 - 50 Gew.-X, bezogen auf das Gesamtgewicht von A, darstellt und die Komponente B ein 0 - 20 Gew.-% Fluor enthaltendes (Meth)Acrylat-Copolymer darstellt, wobei der Fluorgehalt durch Perfluoralkylgruppen eingebracht wird und auf das Gesamtgewicht der Komponente B bezogen ist, die Herstellung der Copolymerisate durch radikalische Lösungspolymerisation erfolgt und wobei die Mischungen zusätzlich an sich bekannte Extender für Textilhilfsmittel enthalten können, dadurch gekennzeichnet, daß die Komponente A aus folgenden einpolymerisierten Comonomeren besteht:
a) 50 - 80 Gew.-% Perfluoralkylgruppen enthaltende (Meth)acrylate der Formel
CₙF₂ₙ₊₁-X-O-CO-CR¹=CH₂ (I),
b) 1 - 45 Gew.-% (Meth)acrylate der Formel
CH=CR⁴-COOR⁵ (II)
und/oder Styrol, Acrylnitril, Vinylacetat beziehungsweise Vinylpropionat,
c) 4 - 30 Gew.-% an (Meth)acrylaten der Formel 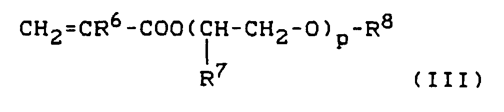 wobei b) und c) insgesamt mindestens 7 Gew.-% darstellen, und
d) 1 - 15 Gew.-% an (Meth)acrylaten der Formel
CH₂=CR¹¹-COO-CH₂-CH₂N(R⁹,R¹⁰) (IVa)
oder in quaternisierter Form der Formel
[CH₂=CR¹¹-COO-CH₂-CH₂N(R⁹,R¹⁰,R¹²)]^{⊕}Y^{⊖} (IVb)
oder in N-oxidierter Form der Formel 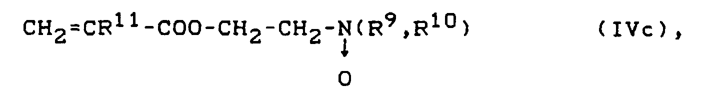
wobei in den Formeln
n eine Zahl von 4 - 12 darstellt,
X für -(CH₂)ₘ-, -SO₂-NR²-CH₂-CHR³- oder -O-(CH₂)ₘ- steht, wobei m eine Zahl von 1 - 4 bedeutet,
R¹, R³, R⁴, R⁶, R⁷ und R¹¹ unabhängig voneinander für Wasserstoff oder Methyl stehen,
R², R⁹, R¹⁰ und R¹² unabhängig voneinander C₁-C₄-Alkyl bedeuten,
R⁵ für einen C₁-C₂₂-Alkylrest steht,
R⁸ Wasserstoff oder C₁-C₈-Alkyl bedeutet,
p für eine Zahl von 1 bis 50 steht und
Y für ein Äquivalent eines ein- bis dreiwertigen Anions steht,
und dadurch gekennzeichnet, daß Komponente B ein 0 bis 20 Gew.-% Fluor enthaltendes (Meth)Acrylat-Copolymer ist, daß aus folgenden einpolymerisierten Comonomeren besteht:
a) 0 - 40 Gew.-% solchen der Formel (I),
b) 20 - 95 Gew.-X solchen der Formel (II) und/oder Styrol, Acrylnitril, Vinylacetat bzw. Vinylpropionat,
c) 4 - 30 Gew.-% solchen der Formel (III) und
d) 1 - 15 Gew.-% solchen der Formel (IVa) oder (IVb) oder (IVc).

2. Mischungen nach Anspruch 1, dadurch gekennzeichnet, daß bei den Monomeren der Formel (I) m einen Wert von 2 einnimmt und unabhängig hiervon R¹ Wasserstoff bedeutet.

3. Mischungen nach Anspruch 1, dadurch gekennzeichnet, daß bei den Monomeren der Formel (II) R⁵ Methyl, Ethyl, Propyl, Butyl, Hexyl, Octyl, Stearyl oder Behenyl bedeutet.

4. Mischungen nach Anspruch 1, dadurch gekennzeichnet, daß bei den Monomeren der Formel (III) R⁷ Wasserstoff bedeutet und unabhängig hiervon p eine Zahl von 3 - 25 darstellt.

5. Mischungen nach Anspruch 1, dadurch gekennzeichnet, daß bei den Monomeren der Formeln (IVa), (IVb) beziehungsweise (IVc) die Reste R⁹ und R¹⁰ Methyl bedeuten und unabhängig hiervon Y Chlorid, Acetat, 112 Sulfat, Aryl- oder Alkylsulfonat oder 1/3 Phosphat ist.

6. Mischungen nach Anspruch 1, dadurch gekennzeichnet, daß die Komponente B einen Fluorgehalt von 5-20 Gew.-% hat.

7. Wäßrige Dispersionen mit 5 bis 50 Gew.-%, bezogen auf das Gesamtgewicht der Dispersion, an von Wasser verschiedenen Inhaltsstoffen (Feststoffgehalt), dadurch gekennzeichnet, daß sie aus Mischungen nach Ansprüchen 1 bis 6 hergestellt werden.

8. Verfahren zur Herstellung von Mischungen von Copolymerisaten gemäß Anspruch 1, dadurch gekennzeichnet, daß die Monomeren der Formeln (I), (II), (III) und (IVa), (IVb) beziehungsweise (IVc) separat für die Komponente A und Komponente B radikalisch in Lösung bei 40 -100°C polymerisiert werden und zur Isolierung der Komponente A und der Komponente B das Lösungsmittel entfernt wird und die Komponenten gemischt werden.

9. Verfahren zur Herstellung von wäßrigen Dispersionen gemäß Anspruch 7, dadurch gekennzeichnet, daß die Monomeren der Formeln (I), (II), (III) und (IVa), (IVb) beziehungsweise (IVc) separat für die Komponente A und Komponente B radikalisch in Lösung bei 40 -100°C polymerisiert werden und der Polymerisationslösung der Komponente A und der der Komponente B Wasser zugesetzt wird, wobei ferner das Lösungsmittel ganz oder wenigstens teilweise abdestilliert wird, und anschließend die wäßrigen Dispersionen der Komponenten A und B vereinigt werden oder die Polymerisatlösungen der Komponenten A und B vereinigt werden und anschließend Wasser zugesetzt wird, wobei ferner das Lösungsmittel ganz oder wenigstens teilweise abdestilliert wird.

10. Verwendung der Copolymerisate nach Anspruch 1 und der daraus hergestellten wäßrigen Dispersionen zur Ausrüstung von Textilien, Leder, Papier und mineralischen Substraten, bevorzugt von Teppichware, zur Öl-, Schmutz-und Wasserabweisung.

## Claims

1. Mixtures which consist of 2 components A and B and have a total fluorine content of 25 - 40% by weight, relative to the total weight of A and B, component A being a (meth)acrylate copolymer containing perfluoroalkyl groups and having a fluorine content of 30 - 50% by weight, relative to the total weight of A, and component B being a (meth)acrylate copolymer containing 0 - 20% by weight of fluorine, the fluorine content being introduced by means of perfluoroalkyl groups and based on the total weight of component B, the copolymers being prepared by free-radical solution polymerisation and it being possible for the mixtures to contain additionally extenders known per se for textile auxiliaries, characterised in that component A consists of the following comonomers incorporated by polymerisation:
a) 50 - 80% by weight of perfluoroalkyl-containing (meth)acrylates of the formula
CₙF₂ₙ₊₁-X-O-CO-CR¹=CH₂ (I),
b) 1 - 45% by weight of (meth)acrylates of the formula
CH₂=CR⁴-CO-R⁵ (II)
and/or styrene, acrylonitrile, vinyl acetate or vinyl propionate,
c) 4 - 30% by weight of (meth)acrylates of the formula 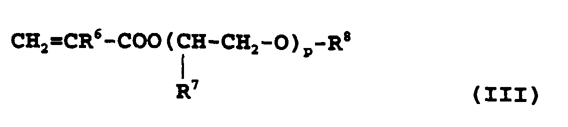 b) and c) in total being at least 7% by weight, and
d) 1 to 15% of (meth)acrylates of the formula
CH₂=CR¹¹-COO-CH₂-CH₂N(R⁹,R¹⁰) (IVa)
or, in quaternised form, of the formula
[CH₂=CR¹¹-COO-CH₂-CH₂N(R⁹, R¹⁰, R¹²)]^{⊕} Y^{⊖} (IVb)
or, in N-oxidised form, of the formula 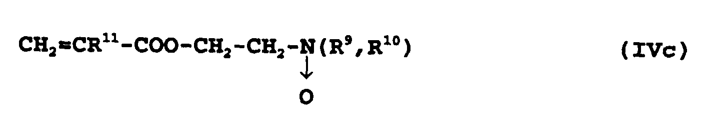
in which formulae
n represents a number from 4 to 12,
X represents -(-CH₂-)ₘ-, -SO₂-NR²-CH₂-CHR³- or -O-(-CH₂-)ₘ-, m denoting a number from 1 to 4,
R¹, R³, R⁴, R⁶, R⁷ and R¹¹ represent, independently of one another, hydrogen or methyl,
R², R⁹, R¹⁰ and R¹² denote, independently of one another, C₁-C₄-alkyl,
R⁵ represents a C₁-C₂₂-alkyl radical,
R⁸ denotes hydrogen or C₁-C₈-alkyl,
p represents a number from 1 to 50 and
Y represents an equivalent of a mono- to trivalent anion,
and characterised in that component B is a (meth)acrylate copolymer containing 0 to 20% by weight of fluorine and consisting of the following comonomers incorporated by polymerisation:
a) 0 - 40% by weight of those of the formula (I),
b) 20 - 95% by weight of those of the formula (II) and/or styrene, acrylonitrile, vinyl acetate or vinyl propionate,
c) 4 - 30% by weight of those of the formula (III) and
d) 1 - 15% by weight of those of the formula (IVa) or (IVb) or (IVc).

2. Mixtures according to Claim 1, characterised in that in monomers of the formula (I), m adopts a value of 2 and R¹, independently thereof, denotes hydrogen.

3. Mixtures according to Claim 1, characterised in that in monomers of the formula (II), R⁵ denotes methyl, ethyl, propyl, butyl, hexyl, octyl, stearyl or behenyl.

4. Mixtures according to Claim 1, characterised in that in monomers of the formula (III), R⁷ denotes hydrogen and p, independently thereof, denotes a number from 3 to 25.

5. Mixtures according to Claim 1, characterised in that in the monomers of the formulae (IVa), (IVb) or (IVc), the radicals R⁹ and R¹⁰ denote methyl and, independently thereof, Y is chloride, acetate, 1/2 sulphate, aryl- or alkylsulphonate or 1/3 phosphate.

6. Mixtures according to Claim 1, characterised in that component B has a fluorine content of 5 - 20% by weight.

7. Aqueous dispersions containing 5 to 50% by weight, relative to the total weight of the dispersions, or ingredients other than water (solids content), characterised in that they are prepared from mixtures according to Claims 1 to 6.

8. Process for the preparation of mixtures of copolymers according to Claim 1, characterised in that the monomers of the formulae (I), (II), (III) and (IVa), (IVb) or (IVc) are separately polymerised for component A and component B by free-radical solution polymerisation at 40 - 100°C and component A and component B are isolated by removing the solvent and the components are mixed.

9. Process for the preparation of aqueous dispersions according to Claim 7, characterised in that the monomers of the formulae (I), (II), (III) and (IVa), (IVb) or (IVc) are separately polymerised for component A and component B by free-radical solution polymerisation at 40 - 100°C and water is added to the polymerisation solution of component A and of component B, during which moreover the solvent is completely or at least in part distilled off, and the aqueous dispersions of components A and B are then combined or the polymer solutions of components A and B are combined and then water is added, during which moreover the solvent is completely or at least in part distilled off.

10. Use of the copolymers according to Claim 1 and the aqueous dispersions prepared therefrom for the oil-, soil- and water-repellent finishing of textiles, leather, paper and mineral substance, preferably carpet goods.

## Revendications

1. Mélanges consistant en deux composants A et B, à une teneur en fluor total de 25 à 40 % du poids total de A et B, le composant A consistant en un copolymère de (méth)acrylates à groupes perfluoralkyle, à une teneur en fluor de 30 à 50 % du poids total de A, et le composant B consistant en un copolymère de (méth)acrylates contenant 0 à 20 % en poids de fluor, le fluor étant apporté par des groupes perfluoralkyle et se rapportant au poids total du composant B, les copolymères étant préparés par polymérisation radicalaire en solution et les mélanges pouvant en outre contenir des diluants connus en soi pour produits auxiliaires textiles, caractérisés en ce que le composant A consiste en les comonomères suivants à l'état polymérisé :
a) 50 à 80 % en poids de (méth)acrylates à groupes perfluoralkyle, de formule :
CₙF₂ₙ₊₁-X-O-CO-CR¹=CH₂ (I)
b) 1 à 45 % en poids de (méth)acrylates de formule :
CH₂=CR⁴-CO-OR⁵ (II)
et/ou
de styrène, d'acrylonitrile, d'acétate de vinyle ou de propionate de vinyle,
c) 4 à 30 % en poids de (méth)acrylates de formule : 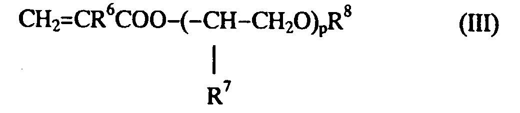 b) et c) représentant au total au moins 7 % en poids, et
d) 1 à 15 % en poids de (méth)acrylates de formule :
CH₂=CR¹¹COOCH₂CH₂N(R⁹,R¹⁰) (IVa)
ou bien, à l'état quaternisé, de formule:
[CH₂=CR¹¹-COO-CH₂CH₂N(R⁹,R¹⁰,R¹²)]^{⊕}Y^{V} (IVb)
ou bien, à l'état de N-oxyde, de formule: 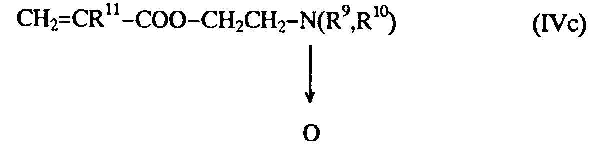 les symboles de ces formules ayant les significations suivantes :
n est un nombre allant de 4 à 12,
X représente -(-CH₂-)ₘ-, -SO₂-NR²-CH₂-CHR³- ou -O-(-CH₂-)ₘ-, m étant un nombre allant de 1 à 4,
R¹, R³, R⁴, R⁶, R⁷ et R¹¹ représentent chacun, indépendamment les uns des autres, l'hydrogène ou un groupe méthyle,
R², R⁹, R¹⁰ et R¹² représentent chacun, indépendamment les uns des autres, un groupe alkyle en C₁ à C₄,
R⁵ représente un groupe alkyle en C₁ à C₂₂,
R⁸ représente l'hydrogène ou un groupe alkyle en C₁ à C₈,
p est un nombre allant de 1 à 50, et
Y représente un équivalent d'un anion mono- à tri-valent,
et caractérisés en ce que le composant B est un copolymère de (méth)acrylates contenant 0 à 20 % en poids de fluor, qui consiste en les comonomères suivants, à l'état polymérisé :
a) 0 à 40 % en poids de monomères de formule (I),
b) 20 à 95 % en poids de monomères de formule (II) et/ou de styrène, d'acrylonitrile, d'acétate de vinyle ou de propionate de vinyle,
c) 4 à 30 % de monomères de formule (III), et
d) 1 à 15 % en poids de monomères de formule (IVa) ou (IVb) ou (IVc).

2. Mélanges selon la revendication 1, caractérisés en ce que, pour les monomères de formule (I), m est égal à 2 et, indépendamment, R¹ représente l'hydrogène.

3. Mélanges selon la revendication 1, caractérisés en ce que, pour les monomères de formule (II), R⁵ représente un groupe méthyle, éthyle, propyle, butyle, hexyle, octyle, stéaryle ou béhényle.

4. Mélanges selon la revendication 1, caractérisés en ce que, pour les monomères de formule (III), R⁷ représente l'hydrogène et, indépendamment, p est un nombre allant de 3 à 25.

5. Mélanges selon la revendication 1, caractérisés en ce que, pour les monomères de formules (IVa), (IVb) et respectivement (IVc), R⁹ et R¹⁰ représentent des groupes méthyle et, indépendamment, Y représente un anion chlorure, acétate, 1/2 sulfate, aryl-ou alkyl-sulfonate ou 1/3 phosphate.

6. Mélanges selon la revendication 1, caractérisés en ce que le composant B a une teneur en fluor de 5 à 20 % en poids.

7. Dispersions aqueuses contenant 5 à 50 % de leur poids total de constituants autres que l'eau (teneur en matières solides), caractérisées en ce qu'on les prépare à partir des mélanges selon les revendications 1 à 6.

8. Procédé de préparation des mélanges de copolymères selon la revendication 1, caractérisé en ce que l'on soumet les monomères de formules (I), (II), (III) et (IVa), (IV) et respectivement (IVc) à polymérisation radicalaire en solution à des températures de 40 à 100°C, séparément pour le composant A et pour le composant B, et pour l'isolement du composant A et du composant B, on élimine le solvant puis on mélange les composants.

9. Procédé de préparation de dispersions aqueuses selon la revendication 7, caractérisé en ce que l'on soumet les monomères de formules (I), (II), (III) et (IVa), (IVb) et respectivement (IVc) à polymérisation radicalaire en solution à des températures de 40 à 100°C, séparément pour le composant A et pour le composant B, et on ajoute de l'eau à la solution de polymérisation du composant A et à la solution de polymérisation du composant B, on élimine en outre le solvant en totalité ou au moins en partie par distillation, puis on combine les dispersions aqueuses des composants A et B, ou bien on combine les solutions de polymérisation des composants A et B et on ajoute de l'eau, puis on distille en totalité ou au moins en partie le solvant.

10. Utilisation des copolymères selon la revendication 1 et des dispersions aqueuses préparées à partir de ceux-ci pour l'apprêtage de matières textiles, du cuir, du papier, de supports minéraux, de préférence de tapis et moquettes, qu'on veut protéger contre les huiles, les salissures et l'eau.
